# FASCICULE DE BREVET EUROPEEN

(11) **EP 4 102 109 B1**
(45) Date de publication et mention de la délivrance du brevet: **07.10.2026**
(21) Numéro de dépôt: 22177281.7
(22) Date de dépôt: 03.06.2022
(51) Int. Cl.: F16H 57/04, F02C 7/36, F02C 7/06

(54) **PIECE MECANIQUE POUR UNE TURBOMACHINE D'AERONEF ET TURBOMACHINE CORRESPONDANTE**
MECHANISCHES BAUTEIL FÜR TURBOTRIEBWERK EINES LUFTFAHRZEUGS UND ENTSPRECHENDES TURBOTRIEBWERK
MECHANICAL PART FOR AN AIRCRAFT TURBINE ENGINE AND CORRESPONDING TURBINE ENGINE

(30) Priorité: 07.06.2021 FR 2105971
(43) Date de publication de la demande: 14.12.2022
(73) Titulaire: Safran Transmission Systems, 92700 Colombes (FR)
(72) Inventeur: MARCOS IZQUIERDO, Juan-Luis, 77500 MOISSY-CEAMAYEL (FR)
(74) Mandataire: Gevers & Orès

(56) Documents cités:
- JP-A- 2011 112 145
- JP-A- 2011 185 322
- US-A1- 2020 309 032
- US-B2- 10 107 231

## Description

### Domaine de l'invention

La présente invention concerne le domaine général des turbomachines et en particulier des turbomachines d'aéronef. Elle vise en particulier une pièce de turbomachine destinée à assurer un écoulement d'huile en fonctionnement.

### Arrière-plan technique

L'art antérieur comprend les documents JP-A-2011 112145, JP-A-2011 185322, US-A1-2020/309032 et US-B2-10107231.

Le document US-B2-10107231 décrit un réducteur mécanique pour une turbomachine d'aéronef, le réducteur mécanique comprenant une pièce mécanique étant réalisée en métal et comportant au moins une surface profilée configurée pour assurer un écoulement d'huile en fonctionnement, la pièce étant une gouttière de récupération d'huile de lubrification, annulaire, la gouttière présentant en coupe une forme de U, avec une paroi de fond depuis laquelle s'étendent deux parois latérales opposées, ladite gouttière comprenant la surface profilée en regard d'une couronne du réducteur mécanique.

Une turbomachine d'aéronef consomme notamment de l'huile pour fonctionner. Cette huile est par exemple nécessaire pour assurer la lubrification de pièces mécaniques, telles que des paliers ou des engrenages, et peut également être utilisée pour refroidir ces pièces.

Certaines pièces mécaniques d'une turbomachine d'aéronef comportent des surfaces profilées pour assurer un écoulement d'huile en fonctionnement. C'est par exemple le cas des gouttières de récupération d'huile de lubrification de réducteur mécanique, notamment à train d'engrenage.

Un réducteur mécanique a pour but de modifier le rapport de vitesse et de couple entre un axe d'entrée et un axe de sortie d'un système mécanique. De manière générale, le réducteur mécanique comprend un solaire, une couronne et des satellites qui sont en prise entre le solaire et la couronne. Les satellites sont maintenus par un châssis appelé porte-satellites.

Il existe plusieurs architectures de réducteur. Dans l'état de l'art des turbomachines à double flux, les réducteurs sont de type à train planétaire ou à train épicycloïdal. Il existe dans d'autres applications similaires, des architectures dites différentielles ou « compound ». Dans un réducteur à train planétaire, le porte-satellites est fixe et la couronne, mobile, constitue l'arbre de sortie du dispositif qui tourne dans le sens inverse du solaire. Dans un réducteur à train épicycloïdal, la couronne est fixe et le porte-satellites constitue l'arbre de sortie du dispositif qui tourne dans le même sens que le solaire. Dans un réducteur à train différentiel, aucun élément n'est fixé en rotation. La couronne tourne dans le sens contraire du solaire et du porte-satellites.

Ces réducteurs étant composés de plusieurs roues et/ou pignons qui engrènent les uns avec les autres, leur lubrification est un aspect primordial pour le bon fonctionnement du réducteur et de la turbomachine. En effet, lorsque le réducteur n'est pas suffisamment lubrifié, les frottements entre les dents des roues et/ou pignons d'engrenage ou au niveau des paliers entraînent leurs usures prématurées et ainsi une baisse du rendement du réducteur. De plus, le train d'engrenage des réducteurs génère une puissance thermique élevée qui entraîne le réchauffement de l'huile en fonctionnement ; l'huile absorbe de l'énergie calorifique générée par le réducteur. La température de l'huile a un impact sur sa viscosité et sur son efficacité de lubrification. Il est donc important d'évacuer l'huile chaude après la lubrification du réducteur, afin de la recycler. Le recyclage constitue au refroidissement, au filtrage, à la désaération de l'huile avant d'être réinjectée dans le système de lubrification. Le recyclage permet également d'éviter l'augmentation des pertes par ventilation du réducteur, l'augmentation de la température des organes internes du réducteur, un taux d'air trop important dans l'huile, etc.

Dans l'optique de récupérer l'huile, il a été proposé une gouttière annulaire ménagée autour de la couronne externe du réducteur. La gouttière présente typiquement une section en forme de U. Le fond et les parois latérales de la gouttière porte une surface qui est orientée vers la périphérie de la couronne et qui est destinée à recevoir les projections d'huile par centrifugation. L'huile s'écoule le long de cette surface vers une sortie située en partie inférieure de la gouttière. Des exemples de gouttières sont décrits dans la demande de brevet FR-A1-3081513.

Toutefois, le réducteur nécessitant un débit d'huile élevé pour son fonctionnement, il est important que ce débit d'huile soit canalisé et évacué le plus rapidement possible afin d'être refroidi puis réinjecté dans le système de lubrification du réducteur.

L'invention a pour but d'éviter les inconvénients précités.

### Résumé de l'invention

L'objectif de l'invention est de fournir une solution simple, efficace et économique permettant de faciliter l'écoulement d'un fluide tel que de l'huile sur une pièce de turbomachine d'aéronef.

Nous parvenons à cet objectif grâce à un réducteur mécanique pour une turbomachine d'aéronef, le réducteur mécanique comprenant une pièce mécanique étant réalisée en métal et comportant au moins une surface profilée configurée pour assurer un écoulement d'huile en fonctionnement, ladite surface comprenant un revêtement plus hydrophobe et/ou lipophobe que ladite surface ou une texturation de surface rendant ladite surface plus hydrophobe et/ou lipophobe, la pièce étant une gouttière de récupération d'huile de lubrification, annulaire, la gouttière présentant en coupe une forme de U, avec une paroi de fond depuis laquelle s'étendent deux parois latérales opposées, ladite gouttière comprenant la surface profilée en regard d'une couronne du réducteur mécanique, chacune desdites parois latérales ayant un bord périphérique définissant un diamètre interne de la gouttière qui est inférieur au diamètre externe de la couronne défini par une périphérie d'une bride de fixation, et un axe d'éléments de fixation de la bride de fixation délimitant un diamètre qui est supérieur au diamètre interne des bords périphériques de sorte à éviter les phénomènes d'aspiration de l'air extérieur à la gouttière vers l'intérieur de la gouttière.

Ainsi, cette solution permet d'atteindre l'objectif susmentionné. En particulier, le revêtement ou la texturation de surface permet de rendre hydrophobe et/ou lipophobe la surface d'écoulement de l'huile. Ceci permet de réduire le coefficient d'étalement de l'huile sur la surface et donc de favoriser la formation de gouttes par exemple plutôt que l'étalement de l'huile sur la surface qui forme alors un film. Ceci permet de faciliter l'écoulement de l'huile sur la surface qui ne « s'attache » pas à la surface et donc d'accélérer cet écoulement. L'accélération de l'huile sur la surface permet de limiter l'impact de l'air de ventilation sur cette huile. Elle peut permettre en outre d'accélérer l'évacuation d'huile et son recyclage et ainsi permettre de réduire la quantité d'huile consommée en fonctionnement de la turbomachine.

Le réducteur mécanique comprend l'une ou plusieurs caractéristiques, prises selon les combinaisons définies dans les revendications dépendantes :
- la surface est en regard de moyens d'éjection d'huile du réducteur mécanique.
- revêtement ou ladite texturation s'étend sur une partie seulement de ladite surface profilée.
- ledit revêtement ou ladite texturation s'étend sur la totalité de ladite surface.
- la pièce mécanique s'étend circonférentiellement autour d'un axe, la surface étant au moins une surface de la paroi de fond et ces parois étant configurées pour assurer un écoulement d'huile en fonctionnement, au moins une partie de la surface comprenant un revêtement hydrophobe et/ou lipophobe ou une texturation de surface rendant ladite surface hydrophobe et/ou lipophobe.
- le revêtement hydrophobe est en polymère, et en particulier un fluopolymère tel qu'un polytétrafluoroéthylène.
- la texturation de surface comprend une répétition surfacique de motifs en creux ou des bosses de dimensions micrométriques ou nanométriques, réalisés par exemple par laser.

Selon l'invention, le réducteur mécanique est à train d'engrenage planétaire et comporte un solaire, une couronne s'étendant autour du solaire, des satellites engrenés avec le solaire et la couronne, et la pièce mécanique formant la gouttière étant disposée radialement autour de la couronne de façon à ce que la surface profilée s'étende autour de la couronne.

L'invention concerne également une turbomachine comprenant au moins un réducteur mécanique tel que susmentionné.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 représente une coupe axiale d'une turbomachine utilisant l'invention ;
[Fig. 2] La figure 2 est une vue schématique partielle et en coupe axiale d'un réducteur mécanique installé dans une turbomachine selon l'invention ;
[Fig. 3] La figure 3 est une vue schématique et en coupe transversale d'un exemple de réducteur mécanique ;
[Fig. 4] La figure 4 est une vue schématique et partielle d'une pièce mécanique de turbomachine telle qu'une gouttière selon l'invention ;
[Fig. 5] La figure 5 est une vue schématique, en perspective et partielle d'un exemple de réalisation d'une pièce mécanique de turbomachine avec une surface hydrophobe et/ou lipophobe selon l'invention ;
[Fig. 6] La figure 6 est une vue schématique, en perspective et partielle d'un autre exemple de réalisation d'une pièce mécanique de turbomachine avec une surface hydrophobe et/ou lipophobe selon l'invention ;
[Fig. 7] La figure 7 est une vue très schématique d'exemples de texturation de surface pour une pièce mécanique selon l'invention, et
[Fig. 8] La figure 8 est une vue très schématique et en coupe d'une pièce mécanique de turbomachine, dont des surfaces comportent des revêtements hydrophobes et/ou lipophobes selon l'invention.

### Description détaillée de l'invention

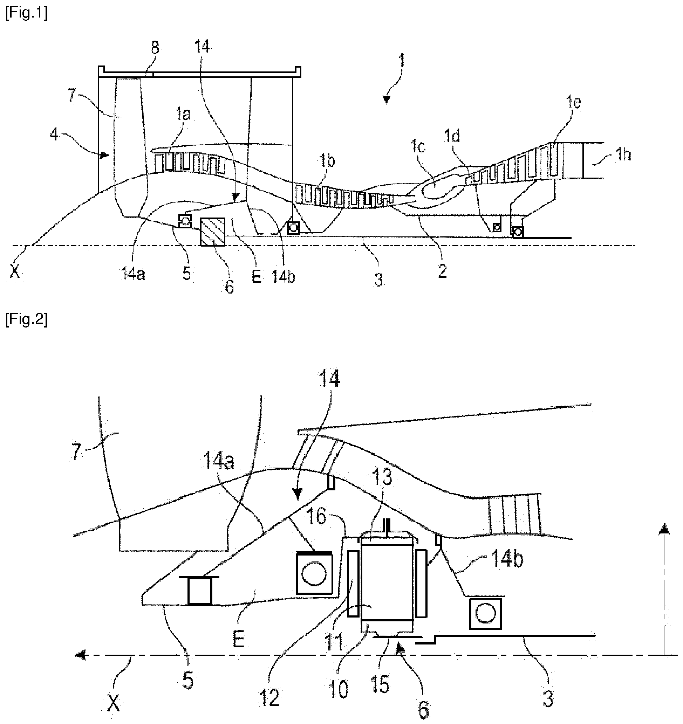

La figure 1 montre une turbomachine qui est destinée à être montée sur un aéronef. La turbomachine illustrée est une turbomachine double flux mais l'invention n'est pas limitée à cette turbomachine. La turbomachine peut être un turbopropulseur et comprendre une seule hélice ou un doublet d'hélices contrarotatives tournant autour d'un axe longitudinal et désignée par l'expression « open rotor » en anglais pour hélice(s) non carénées. La turbomachine peut être aussi un turbomoteur.

De manière générale, une turbomachine 1 double flux, d'axe longitudinal X, comprend d'amont en aval et dans le sens d'écoulement des flux de gaz, une section de compresseur, une chambre de combustion 1c, et une section de turbine. La section de compresseur peut comprendre un compresseur basse pression 1a et un compresseur haute pression 1b. La section de turbine peut comprendre une turbine basse pression 1e et une turbine haute pression 1d. Les compresseurs, la chambre de combustion et les turbines forment un générateur de gaz. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

En aval de la turbine basse pression 1e est agencée une tuyère d'échappement 1h permettant l'évacuation des gaz issus de la chambre de combustion 1c vers l'extérieur.

En amont du compresseur basse pression 1a est montée une soufflante 4. La soufflante 4 est entraînée par un arbre de soufflante 5 lequel est entrainé par l'arbre BP 3 au moyen d'un réducteur mécanique 6. La soufflante 4 comprend une pluralité d'aubes de soufflante 7 qui s'étendent radialement vers l'extérieur depuis un disque de soufflante. Les aubes de soufflante 7 sont délimitées radialement par un carter 8 de soufflante. Ce dernier porte une nacelle accrochée à l'aéronef.

Le réducteur 6 est formé d'un train d'engrenage et est connu sous l'acronyme anglais RGB pour « Reduction Gear Box ». Le réducteur 6 est généralement de type planétaire ou épicycloïdal. Le réducteur comprend, tel qu'illustré de manière schématique sur la figure 2, un solaire 10 (ou planétaire interne), des satellites 11, un porte-satellites 12 et une couronne 13 (ou planétaire externe). Le solaire 10, la couronne 13 et le porte-satellites 12 sont des planétaires car leurs axes de révolution coïncident avec l'axe longitudinal X de la turbomachine. Les satellites ont chacun un axe de révolution différent et sont équirépartis sur le même diamètre de fonctionnement autour de l'axe des planétaires. Ces axes sont parallèles à l'axe longitudinal X.

Dans le présent exemple, le réducteur 6 est ici à train d'engrenage planétaire. L'entrée du réducteur est couplée à l'arbre BP 3 tandis que la sortie du réducteur est couplée à l'arbre de soufflante. En particulier, la couronne 13 est mobile en rotation et le porte-satellites 12 est fixe en rotation.

Bien que la description qui suit concerne un réducteur à train d'engrenage de type planétaire, elle s'applique également à un train d'engrenage épicycloïdal ou à un train d'engrenage différentiel mécanique dans lequel les trois composants, que sont le porte-satellites, la couronne et le solaire, sont mobiles en rotation, la vitesse de rotation de l'un de ces composants dépendant notamment de la différence de vitesses des deux autres composants.

Le réducteur 6 est positionné dans la partie amont de la turbomachine. Une structure fixe 14 comporte schématiquement, ici, une partie amont 14a et une partie aval 14b, qui compose le carter moteur ou stator. La structure fixe est agencée de manière à former une enceinte E entourant le réducteur 6. Cette enceinte E est ici fermée en amont par des joints au niveau d'un palier amont permettant la traversée de l'arbre de soufflante 5, et en aval par des joints au niveau de la traversée de l'arbre BP 3. Le palier amont permet de porter et de guider en rotation l'arbre de soufflante 5 afin de supporter les charges radiales et axiales que subit celui-ci. Ce palier amont est monté dans l'enceinte E. Deux paliers amont peuvent être prévus pour guide l'arbre de soufflante 5 en rotation comme illustré sur la figure 2.

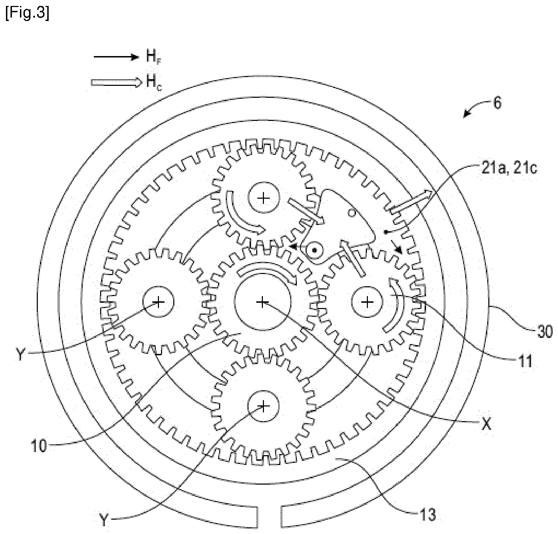

Les figures 2 et 3 montrent le réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 15. Ainsi l'arbre BP 3 entraîne le solaire. Classiquement, le solaire 10, dont l'axe de rotation est confondu avec celui de la turbomachine X, entraîne les satellites 11, qui sont équirépartis sur le même diamètre autour de l'axe de rotation X. Ce diamètre est égal au double de l'entraxe de fonctionnement entre le solaire 10 et les satellites 11. Le nombre de satellites 11 est généralement défini entre trois et sept pour ce type d'application.

L'ensemble des satellites 11 est maintenu par un châssis qui est le porte-satellites 12. Chaque satellite 11, sous forme de pignon, tourne autour de son propre axe Y, et engrène avec la couronne 13. En sortie, l'ensemble des satellites 11 est maintenu par le porte-satellites 10 qui est fixé au carter moteur ou stator 14. Chaque satellite entraine la couronne 13 qui est rapportée à l'arbre de soufflante 4. Un porte-couronne 16 est prévu pour relier l'arbre de soufflante 10 à la couronne 13. Les satellites 11 sont montés libres en rotation à l'aide de paliers, par exemple de type roulement ou palier hydrostatique. Chaque palier est monté sur un des axes du porte-satellites et tous les axes sont positionnés les uns par rapport aux autres à l'aide d'un ou plusieurs châssis structurels du porte-satellites.

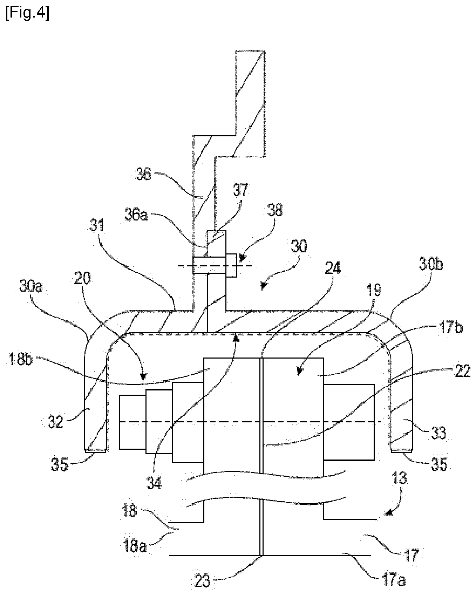

Sur la figure 4, la couronne 13 est pourvue d'une denture interne qui engrène avec la denture des satellites. Dans le présent exemple de réalisation, la couronne 13 est formée en deux parties (soit deux demi-couronnes). Une demi-couronne aval 17 est constituée d'une jante 17a et d'une demi-bride de fixation 17b. La bride 17b s'étend radialement vers l'extérieur. Une demi-couronne amont 18 est constituée d'une jante 18a et d'une demi-bride de fixation 18b. La bride 18b s'étend radialement vers l'extérieur. La jante 17a comprend une portion de denture amont sous forme d'hélice amont de la denture du réducteur. Cette hélice amont engrène avec celle du satellite 11 qui engrène avec celle du solaire 10. La jante 18a quant à celle-ci comprend une portion de denture aval également sous forme d'hélice aval de la denture du réducteur. Cette hélice aval engrène avec celle du satellite 11 qui engrène avec celle du solaire 10. Une telle configuration permet de fabriquer encore plus facilement la couronne et de faciliter la récupération de l'huile. Si les largeurs d'hélice varient entre le solaire 10, les satellites 11 et la couronne 13 à cause des recouvrements de denture, elles sont toutes centrées sur un plan médian pour les hélices amont et sur un autre plan médian pour les hélices aval.

La demi-bride de fixation 17b de la demi-couronne aval et la demi-bride de fixation 18b de la demi-couronne amont forment la bride de fixation 19 de la couronne. La couronne 13 est fixée au porte-couronne en assemblant la bride de fixation 19 de la couronne et une bride de fixation du porte-couronne. Cette fixation est réalisée à l'aide d'organes de fixation 20 tels que des vis, des boulons et/ou écrous.

En fonctionnement, l'huile arrive dans le réducteur 6 depuis la partie stator 14 via un distributeur (non représenté) par différents moyens qui sont spécifiques à un ou plusieurs types d'architecture. Le distributeur est séparé en deux parties et en général chacune répétée du même nombre de satellites. Le distributeur comprend des injecteurs 21a (cf. figure 3) qui ont pour fonction de lubrifier les dentures des roues et/ou pignons du réducteur et des bras qui ont pour fonction de lubrifier les paliers du réducteur. L'huile est amenée vers les injecteurs 21a pour ressortir par des extrémités afin de lubrifier par de l'huile dite froide (HF) les dentures des satellites 11, du solaire 10 et aussi de la couronne 13. L'huile est également amenée vers le bras et circule via la bouche d'alimentation du palier. L'huile circule ensuite à travers l'axe dans une ou des zones tampons pour ensuite ressortir par les orifices afin de lubrifier les paliers des satellites.

En référence à la figure 3 et du fait des forces centrifuges, de l'huile dite chaude HC de lubrification des dentures est projetée radialement vers l'extérieur par rapport aux axes Y des satellites. L'huile chaude est également projetée et éjectée par effet centrifuge de la couronne 13. L'huile est en particulier éjectée radialement vers l'extérieur au niveau de la bride de fixation 19 via des moyens d'éjection d'huile. Les moyens d'éjection comprennent ici un ou plusieurs canaux qui sont régulièrement formés entre les deux demi-couronnes et sur toute la circonférence de la couronne 13.

De manière avantageuse, mais non limitativement, des premiers canaux 22 s'étendent sensiblement suivant l'axe radial Z. Chaque premier canal 22 s'étend radialement entre un orifice d'entrée 23 défini dans une surface interne de la couronne (et qui comprend la denture) et un orifice de sortie 24 défini sur la périphérie de la bride de fixation 19. Préférentiellement, mais non limitativement, il y a plusieurs orifices de sortie 24 répartis circonférentiellement sur la périphérie de la bride 19. L'huile circule depuis l'intérieur de la couronne 13 vers l'extérieur de cette dernière via le ou les canaux 22. Des deuxièmes canaux peuvent également permettre d'évacuer l'huile circulant sur la périphérie externe de la couronne vers les premiers canaux 22.

En référence à la figure 4, la turbomachine est également équipée d'un dispositif de récupération d'huile qui est prévu pour récupérer et évacuer rapidement l'huile éjectée par effet centrifuge du réducteur 6 et aussi de l'enceinte E. Le dispositif de récupération comprend une gouttière 30 de récupération d'huile, annulaire, qui est destinée à récupérer l'huile éjectée du réducteur 6. La gouttière 30, centrée sur l'axe longitudinal X, est agencée autour de la couronne 13. La gouttière 30 est fixée à une structure fixe de la turbomachine (stator). Avantageusement, la gouttière 30 est fixée à l'enceinte E enveloppant le réducteur. La gouttière 30 présente une section axiale en forme générale en U. La gouttière 30 comprend plus précisément une paroi de fond 31 depuis laquelle s'étendent une première paroi latérale 32 et une deuxième paroi latérale 33. La paroi de fond 31 et les parois latérales 32, 33 sont annulaires et centrées sur l'axe longitudinal X. Les parois latérales 32, 33 s'étendent sensiblement radialement (perpendiculaires à l'axe longitudinal X).

La paroi de fond 31 est disposée radialement à l'extérieur de la couronne 13 et est orientée en regard des moyens d'éjection d'huile. Les parois latérales 32, 33 (dites première et deuxième parois) sont disposées de part et d'autre de la bride de fixation 19 suivant l'axe longitudinal. Comme nous pouvons le voir sur la figure 4, la gouttière 30 comprend une surface 34 profilée, ici interne, qui est en regard du réducteur 6 et de la couronne 13. Chaque paroi latérale 32, 33 comprend un bord périphérique 35 délimitant un diamètre interne de la gouttière qui est inférieur au diamètre externe de la couronne 13 défini par la périphérie de la bride de fixation 19. De même l'axe des organes de fixation 20 de la bride de fixation 19 délimite un diamètre qui est supérieur au diamètre interne des bords périphériques 35. Une telle configuration permet d'éviter les phénomènes d'aspiration de l'air extérieur à la gouttière vers l'intérieur de la gouttière. Pour renforcer cet avantage, la paroi de fond 31 et les parois latérales 32, 33 sont disposées à une distance prédéterminée de la bride de fixation 19, notamment sa périphérie et des organes de fixation 19. Ces distances prédéterminées tiennent compte des déplacements axiaux de la couronne au cours du fonctionnement du réducteur, des tolérances de fabrication et de la dilatation thermique des pièces.

Dans l'exemple qui est représenté, la gouttière 30 est formée de deux parties afin de faciliter le montage et le démontage de celle-ci dans la turbomachine. Bien évidemment la gouttière peut être formée d'une seule pièce (venue de matière). La gouttière 30 comprend une première partie 30a et une deuxième partie 30b. La première partie 30a comprend une première patte 36, la première paroi latérale 32 et une portion de paroi de fond reliant la première patte 36 et la première paroi latérale 32. La deuxième partie 30b comprend une deuxième patte 37, la deuxième paroi latérale 33 et une portion de paroi de fond reliant la deuxième patte 37 et la deuxième paroi latérale 33. Les première et deuxième pattes 36, 37 s'étendent radialement vers l'extérieur. En particulier, les première et deuxième pattes 36, 37 comprennent chacune une surface d'appui définie dans un plan, et ces plans sont parallèles. La première partie et la deuxième partie sont fixées ensemble au niveau des première et deuxième pattes. Des organes de fixation 38 permettent de fixer les pattes 36, 37 entre elles. Les organes de fixation 38 comprennent des vis, des écrous, des boulons ou tout autre organe adéquat. Dans cet exemple de réalisation, la première patte 35 comprend un renfoncement annulaire 36a destiné à recevoir une partie de la deuxième patte 37. La surface interne des portions de parois de fond et des parois latérales présentent une continuité de surface et sont affleurantes. La première patte 36, qui présente une longueur supérieure à la deuxième patte 37, permet la fixation de la gouttière 30 à la structure fixe de la turbomachine.

Suivant une autre alternative, la gouttière 30 comprend une unique patte radiale permettant la fixation sur la structure fixe de la turbomachine.

La gouttière 30 est réalisée dans un matériau métallique. Le matériau métallique peut être de l'acier ou du titane. De manière avantageuse, mais non limitativement, la gouttière 30 est réalisée à partir d'une tôle pour alléger le poids de celle-ci. Les parois 31, 32, 33 sont obtenues par pliage ou par soudage. Le pliage et le soudage sont faciles et rapides à mettre en œuvre et nécessitent très peu d'outillage pour fabriquer la gouttière.

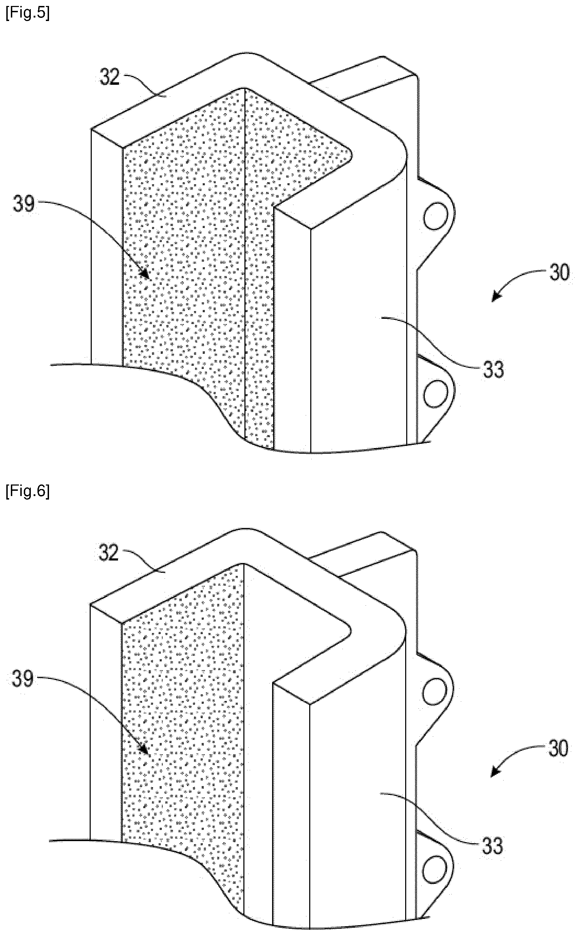

La figure 5 montre un premier mode de réalisation d'une gouttière 30 dans lequel la surface 34 profilée, interne, comprend un revêtement hydrophobe et/ou lipophobe ou une texturation de surface rendant ladite surface hydrophobe et/ou lipophobe. Dans la présente description, nous entendons par les termes « hydrophobe » et « lipophobe » (et voire « oléophobe ») la capacité d'une surface à repousser de l'eau et/ou de l'huile de ladite surface pour diminuer la surface de contact entre la surface et la goutte qui est formée. De telles propriétés permettent alors de diminuer le coefficient de friction. Le revêtement ou la surface texturée permet un coefficient de friction plus petit entre la surface de l'eau et/ou l'huile et la surface métallique avec le revêtement. Plus précisément encore, le caractère lipophobe et/ou hydrophobe permet au fluide (eau/huile/ graisse) de perler (forme des perles) lorsque celui-ci arrose la pièce mécanique, ce qui contribue a une bonne évacuation de ce fluide. De même, nous comprenons aussi par « plus lipophobe/hydrophobe » que la surface est moins lipophile/hydrophile, à savoir le fluide aura moins tendance à s'étaler/rester sur la surface.

Le revêtement ou la texturation s'étend sur toute la surface interne des parois latérales et de la paroi de fond.

La figure 6 montre un second mode de réalisation de la gouttière 30 dans lequel uniquement la surface des parois latérales 32, 33 comprend un revêtement ou une texturation de surface. Autrement dit, la surface de la paroi de fond est dépourvue de revêtement ou texturation.

Suivant une alternative non représentée, le revêtement ou la texturation de surface s'étend ainsi sur des zones prédéterminées des parois latérales 32, 33 et/ou de la paroi de fond 31. Les zones prédéterminées peuvent correspondre à des bandes annulaires en regard des organes de fixation 38 et/ou de la bride de fixation 09. Dans le cas des zones annulaires prévues sur les parois latérales, celles-ci seraient éloignées des bords périphériques 34 de parois latérales 32, 33. Dans le cas de la zone de la paroi de fond, celle-ci serait éloignée des parois latérales.

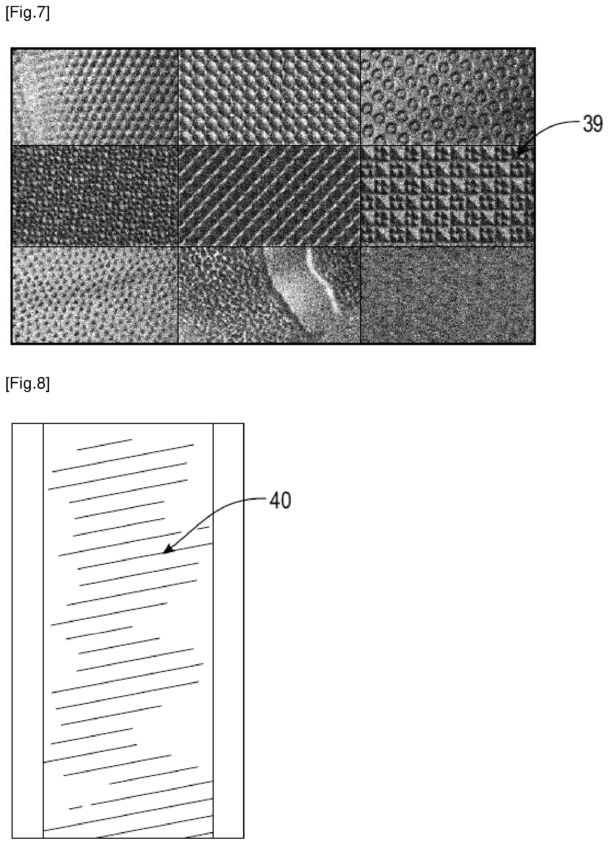

La figure 7 montre différents exemples de texturation de surface 39 pour toute la surface ou certaines zones de la surface.

La texturation de surface 39 comprend de préférence une répétition surfacique de motifs en creux ou bosse de dimensions micrométriques. Les dimensions peuvent être également être de l'ordre du nanomètre. Les motifs peuvent être linéaires ou ponctuels. La texturation 38 est avantageusement, mais non limitativement, réalisée à l'aide d'un procédé de micro-usinage par enlèvement de matière. Un exemple de procédé de micro-usinage est le micro-usinage laser.

Les motifs en creux ou bosses permettent de diminuer l'aire de la surface en contact avec le fluide contenant de l'eau et/ou de l'huile et ainsi de réduire la friction de l'eau et/ou de l'huile avec la surface. De la sorte, les motifs ont pour effet de repousser le fluide qui s'écoule ou se déplace plus rapidement sur le revêtement ou la surface texturée.

La figure 8 montre un exemple de revêtement hydrophobe et/lipophobe 40 destiné à revêtir la surface interne des parois latérales et/ou de la paroi des fond ou certaines zones prédéterminées de celle-ci.

Le revêtement hydrophobe et/ou lipophobe 40 est de préférence en polymère, et en particulier un fluopolymère tel qu'un polytétrafluoroéthylène (PTFE). Il a par exemple une épaisseur comprise entre 1 et 100 µm. Il peut être obtenu par pulvérisation d'une solution sur la surface interne chaque surface et chauffage en vue de la polymérisation et durcissement du revêtement.

Ainsi la pièce mécanique, ici la gouttière 30 de récupération d'huile, équipée d'un tel revêtement 40 ou d'une telle texturation 39 facilite la récupération et l'évacuation de l'huile. L'écoulement est facilité du fait qu'en diminuant le coefficient d'étalement de l'huile, nous augmentons la vitesse et ainsi le débit d'évacuation de la gouttière. Cette évacuation est importante notamment dans les phases de fonctionnement ou de vol de l'aéronef où le réducteur a besoin d'un débit important d'huile tel que lors du décollage.

Le revêtement hydrophobe et/ou lipophobe, et la texturation apportent les mêmes avantages évoqués plus haut. L'avantage de la texturation par rapport au revêtement est qu'elle n'introduit pas d'éventuels polluants car le revêtement est susceptible de se dégrader en fonctionnement et de relarguer des éléments non désirés dans le moteur.

## Revendications

1. Réducteur mécanique (6) pour une turbomachine d'aéronef, le réducteur mécanique (6) comprenant une pièce mécanique étant réalisée en métal et comportant au moins une surface (34) profilée configurée pour assurer un écoulement d'huile en fonctionnement, la pièce étant une gouttière (30) de récupération d'huile de lubrification, annulaire, la gouttière (30) présentant en coupe une forme de U, avec une paroi de fond (31) depuis laquelle s'étendent deux parois latérales (32, 33) opposées, ladite gouttière (30) comprenant la surface (34) profilée en regard d'une couronne (13) du réducteur mécanique (6), **caractérisé en ce que** ladite surface (34) comprend un revêtement (40) plus hydrophobe et/ou lipophobe que ladite surface (34) ou une texturation de surface (39) rendant ladite surface plus hydrophobe et/ou lipophobe et **en ce que** chacune desdites parois latérales (32, 33) a un bord périphérique (35) définissant un diamètre interne de la gouttière (30) qui est inférieur au diamètre externe de la couronne (13) défini par une périphérie d'une bride de fixation (19), et un axe d'éléments de fixation de la bride de fixation (19) délimitant un diamètre qui est supérieur au diamètre interne des bords périphériques (35) de sorte à éviter les phénomènes d'aspiration de l'air extérieur à la gouttière vers l'intérieur de la gouttière.

2. Réducteur mécanique (6) selon la revendication 1, **caractérisé en ce que** la surface (34) est agencée en regard de moyens d'éjection d'huile du réducteur mécanique (6).

3. Réducteur mécanique (6) selon l'une des revendications 1 à 2, **caractérisé en ce que** ledit revêtement (40) ou ladite texturation (38) s'étend sur une partie seulement de ladite surface (34).

4. Réducteur mécanique (6) selon l'une des revendications 1 à 2, **caractérisé en ce que** ledit revêtement (40) ou ladite texturation (39) s'étend sur la totalité de ladite surface (34).

5. Réducteur mécanique (6) selon l'une des revendications 1 à 4, **caractérisé en ce que** la pièce mécanique s'étend circonférentiellement autour d'un axe, la surface (34) étant au moins une surface de la paroi de fond (31) et ces parois latérales (32, 33) étant configurées pour assurer un écoulement d'huile en fonctionnement, au moins une partie de la surface (34) comprenant un revêtement hydrophobe et/ou lipophobe (40) ou une texturation de surface (39) rendant ladite surface hydrophobe et/ou lipophobe.

6. Réducteur mécanique (6) selon l'une des revendications 1 à 5, **caractérisé en ce que** le revêtement hydrophobe (40) est en polymère, et en particulier un fluopolymère tel qu'un polytétrafluoroéthylène.

7. Réducteur mécanique (6) selon l'une des revendications 1 à 5, **caractérisé en ce que** la texturation de surface (39) comprend une répétition surfacique de motifs en creux ou des bosses de dimensions micrométriques ou nanométriques.

8. Réducteur mécanique (6) selon l'une des revendications précédentes, **caractérisé en ce que** le réducteur mécanique est à train d'engrenage planétaire et comporte un solaire (10), une couronne (13) s'étendant autour du solaire, des satellites (11) engrenés avec le solaire (10) et la couronne (13), et la pièce mécanique (30) formant la gouttière en étant disposée radialement autour de la couronne (13) de façon à ce que la surface profilée (34) s'étende autour de la couronne (13).

9. Turbomachine (1), en particulier d'aéronef, comportant au moins un réducteur mécanique (6) selon l'une des revendications 1 à 8.

## Patentansprüche

1. Mechanisches Untersetzungsgetriebe (6) für ein Turbotriebwerk eines Luftfahrzeugs, wobei das mechanische Untersetzungsgetriebe (6) ein aus Metall gefertigtes Bauteil umfasst, das mindestens eine profilierte Oberfläche (34) aufweist, die so konfiguriert ist, dass sie im Betrieb einen Ölfluss gewährleistet, wobei das Bauteil eine ringförmige Rinne (30) zum Auffangen von Schmieröl ist, wobei die Rinne (30) im Querschnitt eine U-Form aufweist, mit einer Bodenwand (31), von der sich zwei gegenüberliegende Seitenwände (32, 33) erstrecken, wobei die Rinne (30) die profilierte Oberfläche (34) gegenüber einem Zahnkranz (13) des mechanischen Untersetzungsgetriebes (6) umfasst, **dadurch gekennzeichnet, dass** die Oberfläche (34) eine Beschichtung (40) aufweist, die hydrophober und/oder lipophober ist als die Oberfläche (34), oder eine Oberflächenstrukturierung (39), die die Oberfläche hydrophober und/oder lipophober macht, und dass jede der Seitenwände (32, 33) einen Umfangsrand (35) aufweist, der einen Innendurchmesser der Rinne (30) definiert, der kleiner ist als der Außendurchmesser des Kranzes (13), der durch einen Umfang eines Befestigungsflansches (19) definiert ist, und eine Befestigungselementachse des Befestigungsflansches (19) einen Durchmesser begrenzt, der größer ist als der Innendurchmesser der Umfangskanten (35), um die Phänomene des Ansaugens von Luft von außerhalb der Rinne in das Innere der Rinne zu verhindern.

2. Mechanisches Untersetzungsgetriebe (6) nach Anspruch 1, **dadurch gekennzeichnet, dass** die Oberfläche (34) gegenüber Ölausstoßvorrichtungen des mechanischen Untersetzungsgetriebes (6) angeordnet ist.

3. Mechanisches Untersetzungsgetriebe (6) nach einem der Ansprüche 1 bis 2, **dadurch gekennzeichnet, dass** sich die Beschichtung (40) oder die Strukturierung (38) nur über einen Teil der Oberfläche (34) erstreckt.

4. Mechanisches Untersetzungsgetriebe (6) nach einem der Ansprüche 1 bis 2, **dadurch gekennzeichnet, dass** sich die Beschichtung (40) oder die Strukturierung (39) über die gesamte Oberfläche (34) erstreckt.

5. Mechanisches Untersetzungsgetriebe (6) nach einem der Ansprüche 1 bis 4, **dadurch gekennzeichnet, dass** sich das mechanische Bauteil in Umfangsrichtung um eine Achse erstreckt, wobei die Oberfläche (34) mindestens eine Oberfläche der Bodenwand (31) ist und diese Seitenwände (32, 33) so konfiguriert sind, dass sie im Betrieb einen Ölfluss gewährleisten, wobei mindestens ein Teil der Oberfläche (34) eine hydrophobe und/oder lipophobe Beschichtung (40) oder eine Oberflächenstrukturierung (39) aufweist, die diese Oberfläche hydrophob und/oder lipophob macht.

6. Mechanisches Untersetzungsgetriebe (6) nach einem der Ansprüche 1 bis 5, **dadurch gekennzeichnet, dass** die hydrophobe Beschichtung (40) aus einem Polymer besteht, und insbesondere aus einem Fluorpolymer wie beispielsweise Polytetrafluorethylen.

7. Mechanisches Untersetzungsgetriebe (6) nach einem der Ansprüche 1 bis 5, **dadurch gekennzeichnet, dass** die Oberflächenstrukturierung (39) eine sich über die Oberfläche wiederholende Anordnung von Vertiefungen oder Erhebungen mit Mikrometer- oder Nanometerabmessungen umfasst.

8. Mechanisches Untersetzungsgetriebe (6) nach einem der vorstehenden Ansprüche, **dadurch gekennzeichnet, dass** das mechanische Untersetzungsgetriebe ein Planetengetriebe ist und ein Sonnenrad (10), einen sich um das Sonnenrad erstreckenden Zahnkranz (13), Planetenräder (11), die mit dem Sonnenrad (10) und dem Zahnkranz (13) in Eingriff stehen, sowie das die Rinne bildende mechanische Bauteil (30) umfasst, das radial um den Zahnkranz (13) herum so angeordnet ist, dass sich die profilierte Oberfläche (34) um den Zahnkranz (13) erstreckt.

9. Turbotriebwerk (1), insbesondere eines Luftfahrzeugs, das ein mechanisches Untersetzungsgetriebe (6) nach einem der Ansprüche 1 bis 8 umfasst.

## Claims

1. Mechanical speed reducer (6) for an aircraft turbine engine, the mechanical speed reducer (6) comprising a mechanical part being made of metal and comprising at least one profiled surface (34), configured to ensure an oil flow in operation, the part being an annular lubrication oil collection gutter (30), the gutter (30) having a U-shape in cross-section, with a bottom wall (31) from which two opposite side walls (32, 33) extend, said gutter (30) comprising the profiled surface (34) facing a ring (13) of the mechanical speed reducer (6), **characterized in that** said surface (34) comprises a coating (40) which is more hydrophobic and/or lipophobic than said surface (34) of a surface texturing (39) making said surface more hydrophobic and/or lipophobic, and **in that** each of said side walls (32, 33) has a peripheral edge (35) defining an internal diameter of the gutter (30), which is less than the external diameter of the ring (13) defined by a periphery of a fixing flange (19), and an axis of fixing elements of the fixing flange (19) delimiting a diameter which is greater than the internal diameter of the peripheral edges (35), so as to avoid the phenomena of suctioning the air external to the gutter to the inside of the gutter.

2. Mechanical speed reducer (6) according to claim 1, **characterized in that** the surface (34) is arranged facing the oil ejection means of the mechanical speed reducer (6).

3. Mechanical speed reducer (6) according to any one of claims 1 to 2, **characterized in that** said coating (40) or said texturing (38) extends over only one part of said surface (34).

4. Mechanical speed reducer (6) according to any one of claims 1 to 2, **characterized in that** said coating (40) or said texturing (39) extends over all of said surface (34).

5. Mechanical speed reducer (6) according to any one of claims 1 to 4, **characterized in that** the mechanical part extends circumferentially about an axis, the surface (34) being at least one surface of the bottom wall (31) and these side walls (32, 33) being configured to ensure an oil flow in operation, at least one part of the surface (34) comprising a hydrophobic and/or lipophobic coating (40) or a surface texturing (39) making said surface hydrophobic and/or lipophobic.

6. Mechanical speed reducer (6) according to any one of claims 1 to 5, **characterized in that** the hydrophobic coating (40) is made of polymer, and in particular, a fluopolymer such as a polytetrafluoroethylene.

7. Mechanical speed reducer (6) according to any one of claims 1 to 5, **characterized in that** the surface texturing (39) comprises a surface repetition of hollow patterns or bosses of micrometric or nanometric dimensions.

8. Mechanical speed reducer (6) according to any one of the preceding claims, **characterized in that** the mechanical speed reducer is a planetary gear train and comprises a sun (10), a ring (13) extending around the sun, satellites (11) meshed with the sun (10) and the ring (13), and the mechanical part (30) forming the gutter by being disposed radially around the ring (13), such that the profiled surface (34) extends around the ring (13).

9. Turbine engine (1), in particular, an aircraft turbine engine, comprising at least one mechanical speed reducer (6) according to any one of claims 1 to 8.
